# EUROPÄISCHE PATENTSCHRIFT

(11) **EP 4 211 306 B1**
(45) Veröffentlichungstag und Bekanntmachung des Hinweises auf die Patenterteilung: **17.07.2024**
(21) Anmeldenummer: 21769890.1
(22) Anmeldetag: 31.08.2021
(51) Int. Cl.: D21F 11/00, D21F 11/08, D21F 11/14

(54) **GRÜNPAPIER ZUR HERSTELLUNG EINES GAS-DIFFUSION-LAYERS FÜR EINE BRENNSTOFFZELLE**
GREEN PAPER FOR PRODUCING A GAS DIFFUSION LAYER FOR A FUEL CELL
PAPIER VERT POUR LA PRODUCTION D'UNE COUCHE DE DIFFUSION GAZEUSE POUR UNE PILE À COMBUSTIBLE

(30) Priorität: 07.09.2020 DE 102020005480
(43) Veröffentlichungstag der Anmeldung: 19.07.2023
(73) Patentinhaber: Giesecke+Devrient Currency Technology GmbH, 81677 München (DE)
(72) Erfinder: MAYER, Karlheinz, 88167 Grünenbach (DE); TANTSCHER, Alexander, 01259 Dresden (DE)
(74) Vertreter: Giesecke+Devrient IP
(86) Internationale Anmeldenummer: PCT/EP2021/025327
(87) Internationale Veröffentlichungsnummer: WO 2022/048794

(56) Entgegenhaltungen:
- WO-A2-2006/099971
- CN-A- 110 485 191
- DE-B3- 102008 042 415
- US-A1- 2007 238 010
- MATHUR ET AL: "Characteristics of the carbon paper heat-treated to different temperatures and its influence on the performance of PEM fuel cell", ELECTROCHIMICA ACTA, ELSEVIER, AMSTERDAM, NL, vol. 52, no. 14, 16 March 2007 (2007-03-16), pages 4809 - 4817, XP005939064, ISSN: 0013-4686, DOI: 10.1016/J.ELECTACTA.2007.01.041

## Beschreibung

Die Erfindung betrifft ein Grünpapier zur Herstellung eines Gas-Diffusion-Layers (GDL) für eine Brennstoffzelle. Die Erfindung betrifft weiterhin ein Verfahren zur Herstellung eines Grünpapier zur Herstellung eines Gas-Diffusion-Layers (GDL) für eine Brennstoffzelle.

Bei einer Brennstoffzelle vom Typ Proton Exchange Membrane Fuel Cell (PEMFC), auch als Polymerelektrolytbrennstoffzelle bezeichnet, wird die Gasverteilung über eine sogenannte Bipolarplatte (BPP) und das Gas Diffusion Layer (GDL) an die, mit katalytischem Platin beschichtete, Membran (auch als CL bzw. Catalyst Layer bezeichnet) erreicht. Der gesamte Aufbau zwischen zwei Bipolarplatten wird auch als Membrane-Electrode Assembly (MEA) bezeichnet.

Die Brennstoffzelle produziert unter der katalytischen Oxidation von Wasserstoff und Sauerstoff, elektrischen Strom, Wasserdampf und Wärme.

Für den Automotive-Bereich hat sich mittlerweile ein GDL durchgesetzt, die aus einem Fasermaterial, beispielsweise aus Carbonfasern hergestellt wird, und eine beschichtete BPP aus Stahl. Das Fasermaterial kann dabei als textiles Gewebe/Gewirke oder als papiertechnisch hergestellte Fasermatte ausgeführt sein, die beispielsweise aus DE 10 2008 042 415 B3 oder CN 110 485 191 A bekannt ist. Es kann auch aus zwei Lagen bestehen, einer feinen Lage, die an die CL grenzt und einer gröberen Lage, die an die BPP und das Flow-Field grenzt.

Die papiertechnisch hergestellte Fasermatte wird als Grünpapier oder Sinterpapier bezeichnet, das in einem der nachfolgenden Arbeitsschritte entbindert und/oder gesintert und damit zu einem GDL weiterverarbeitet wird.

Nachteilig bei der Herstellung von GDLs basierend auf Carbonfasern ist insbesondere, dass Carbonfasern sowie deren Weiterverarbeitung mit relativ hohen Kosten verbunden ist. Des Weiteren sind Carbonfasern druckempfindlich, was zum Brechen von Fasern führen kann, die dann möglicherweise die CL/PEM verletzten können. Des Weiteren können die Carbonfasern aufwölben oder aufquellen und dabei in die Kanäle der BPP eindringen, wodurch der Gas- und Wasserdurchfluss gemindert wird und die Effizienz der Brennstoffzelle leidet. Des Weiteren ist die Porosität des GDL nur begrenzt einstellbar und sind bei einem zweischichtigen GDL mit einer Kombination aus grober und feiner Porosität mindestens zwei zusätzliche Arbeitsschritte notwendig.

Schließlich muss das Flow-Field vollständig von der BPP gebildet werden, weil ein aus dem Stand der Technik bekanntes GDL keine Möglichkeit zur Strukturierung bietet. Dazu muss die BPP geprägt werden oder das Grünpapier bearbeitet werden, um eine Gasverteilungsstruktur bzw. eine Strukturierung für das Flow-Field zu erreichen. Dies ist in der Regel ein eigener, aufwändiger Arbeitsgang.

Der Erfindung liegt deshalb die Aufgabe zugrunde, ein gattungsgemäßes Grünpapier zur Herstellung eines Gas-Diffusion-Layers (GDL) für eine Brennstoffzelle sowie ein gattungsgemäßes Verfahren zur Herstellung eines Grünpapiers zur Herstellung eines Gas-Diffusion-Layers (GDL) für eine Brennstoffzelle derart weiterzubilden, dass die Nachteile des Standes der Technik behoben werden.

Diese Aufgabe wird durch die Merkmale der unabhängigen Ansprüche gelöst. Weiterbildungen der Erfindung sind Gegenstand der abhängigen Ansprüche.

Erfindungsgemäß weist das Grünpapier mindestens eine erste Papierbahn auf, in die mindestens ein Wasserzeichen eingebracht ist. Das Wasserzeichen bildet dabei die Strukturierung für das Flow-Field bzw. die Gasverteilungsstruktur des aus dem Grünpapier hergestellten Gas-Diffusion-Layers (GDL). Besonders bevorzugt ist die erste Papierbahn mit Metall-Pulver und/oder Metall-Fasern versetzt. Die endgültige GDL entsteht nach dem Entbindern, Sintern, Beschichten, Abscheiden von Atomschichten (ALD - atomic layer deposition) und gegebenenfalls weiteren Prozessschritten.

Die Erfindung betrifft weiterhin ein Verfahren zur Herstellung eines Grünpapiers zur Herstellung eines Gas Diffusion Layer (GDL), bei dem mindestens eine erste bevorzugt mit Metall-Pulver und/oder Metall-Fasern versetzte Papierbahn erzeugt wird, in die mindestens ein Wasserzeichen eingebracht wird. Diese Papierbahn wird anschließend durch Entbindern, Sintern, Beschichten, Abscheiden von Atomschichten (ALD - atomic layer deposition) mittels des thermischen ALD-Verfahrens und gegebenenfalls weiteren Prozessschritten zur endgültigen GDL verarbeitet.

Nach dem Sintern sind alle organischen Bestandteile des Grünpapiers pyrolysiert und damit nicht mehr in dem GDL enthalten, das GDL besteht nahezu ausschließlich aus einem Metallgerüst. Die Porosität des Metallgerüstes ist nach derzeitiger Ansicht abhängig insbesondere von der Faserdichte der Papierbahnen, der (Korn-) Größe der Metall-Pulver und/oder Metall-Fasern und zugegebenen Additiven.

Es hat sich überraschend gezeigt, dass ein papiermacherisch hergestelltes Grünpapier durch Einbringung eines Wasserzeichens in eine Papierbahn des Grünpapiers derart strukturiert werden kann, dass eine aufwendige Prägung der BPP oder Nachbearbeitung des Grünpapiers bzw. des aus dem Grünpapier hergestellten GDL entfällt oder zumindest einfacher ausgeführt werden kann.

Erfindungsgemäß wird das spätere Flow-Field ohne eigenen Arbeitsgang in das Grünpapier integriert, indem ein entsprechendes Wasserzeichen in die Wasserzeichenlage am Rundsieb einer Papiermaschine integriert wird. Dabei kann, ohne besonderen Aufwand, durch die Design-abhängige Strukturierung des Wasserzeichensiebes, mit der damit verbundenen Dickenmodulation des Papiers, jede beliebige Form und Abstufung der Flow-Field-Kanäle erzielt werden. Um die Auflösung der Strukturierung zu erhöhen, kann auch ein hochaufgelöstes bzw. mehr- oder vielstufiges Wasserzeichen eingesetzt werden, wie es beispielsweis aus EP 1432868 A1 oder WO 2014/040706 A1 bekannt ist.

Ein Wasserzeichen ist im Sinne dieser Erfindung ein echtes Wasserzeichen, bei dem die Dicke des Papiers variiert, die Dichte des Papiers jedoch nicht variiert. Das Papier weist hierbei Bereiche auf, die gegenüber den benachbarten Bereichen eine größere und/oder geringere Dicke aufweisen, wobei die Dichte des Papiers in allen Bereichen gleich ist. Ein derartiges Wasserzeichen kann entweder bei der Papierherstellung in die Papierbahn eingebracht werden, indem beispielsweise in ein Rundsieb Vertiefungen oder Erhöhungen eingebracht sind, an denen sich beim Schöpfen des Papiers aus der Pulpe mehr oder weniger Papierfasern anlagern. Es kann jedoch auch nachträglich in die Papierbahn eingebracht werden, indem Teile des Papiers abgetragen werden, beispielsweise mechanisch durch Fräsen oder durch lasern.

Alternativ ist auch ein unechtes Wasserzeichen möglich, bei dem die noch nasse Papierbahn durch einen Prägevorgang nach dem Abnehmen der Papierbahn beispielsweise von dem Rundsieb geprägt wird. Ein derartiges Wasserzeichen wird auch als Egoutteur-Wasserzeichen bezeichnet. Durch das Prägen wird die Dicke des Papiers reduziert, wobei jedoch gleichzeitig die Dichte des Papiers erhöht wird. Die Papierfasern werden also verdichtet bzw. zusammengepresst. Diese Verdichtung hat den Vorteil, dass sie verhindert, dass zu viel Gas bereits im vorderen Bereichs des Kanals Richtung Catalyst Layer (CL) durch die GDL hindurchdiffundiert und sorgt damit für eine gleichmäßigere Gasverteilung.

Besonders bevorzugt können ein echtes Wasserzeichen und ein unechtes Wasserzeichen miteinander kombiniert werden, indem beispielsweise Teile eines Wasserzeichens durch ein echtes Wasserzeichen und andere Teile durch ein unechtes Wasserzeichen gebildet werden.

Gemäß einer weiteren bevorzugten Ausführungsform ist vorgesehen, dass das Grünpapier aus einer ersten Papierbahn und mindestens einer zweiten Papierbahn besteht. Das Grünpapier wird hierbei aus der ersten Papierbahn und mindestens eine zweite Papierbahn gebildet. Die zweite Papierbahn wird im noch feuchten Zustand mit der ersten Papierbahn zusammengeführt und fest verbunden. Hierbei kann auch die zweite und/oder jede weitere Papierbahn ein Wasserzeichen aufweisen.

Die erste und/oder mindestens eine zweite Papierbahn kann hierbei in einer Rundsieb-Papiermaschine erzeugt werden. Alternativ kann die erste und/oder mindestens eine zweite Papierbahn auch in einem Kurzformer erzeugt werden, bei dem die Papiermasse auf ein Rundsieb aufgedüst wird. Diese Herstellungsverfahren sind für die Herstellung von Sicherheits- oder Wertdokumenten, wie Banknoten oder Ausweiskarten, aus WO 2006/099971 A2 bekannt und sind auch erfindungsgemäß bevorzugte Verfahren zur Herstellung eines GDL aus mindestens einer Papierbahn.

So entsteht in einem Arbeitsgang das mit Metall-Pulver und/oder Metall-Fasern hochgefüllte Grünpapier, das nach DE 10 2008 042 415 B3 mit mindestens zwei verschiedene Rezepturen zu einem kombinierten Grünpapier mit verschiedenen Eigenschaften verarbeitet wird. Für die Brennstoffzelle sind dies zum Beispiel eine dünne Lage mit feinen Poren und eine dickere Lage mit gröberen Poren. Auch die Porosität kann zwischen zwei Papierbahnen variieren.

Des Weiteren ist es besonders vorteilhaft, wenn das Grünpapier aus zwei Papierbahnen besteht, die jeweils ein Wasserzeichen aufweisen, wobei die Strukturen des Wasserzeichens der ersten Papierbahn und des Wasserzeichens der zweiten Papierbahn nicht identisch sind, sondern genau spiegelsymmetrisch in der Fläche und in Richtung der Materialstärke. Anders ausgedrückt sind die Strukturen des Wasserzeichens der ersten Papierbahn um 180° phasenverschoben zu den Strukturen des Wasserzeichens der zweiten Papierbahn. Das bedeutet, dass wenn die erste Papierbahn und die zweite Papierbahn mit ihrer durch das Wasserzeichen strukturierten Seite zusammengefügt werden, die Erhebungen der ersten Papierbahn mit den Vertiefungen der zweiten Papierbahn zusammenfallen. Diese Ausführungsform hat den besonderen Vorteil, dass die erste und die zweite Papierbahn nach dem Sintern eine unterschiedlich Porosität aufweisen können. Beispielsweise weist die erste Papierbahn, die der Membran zugewandt ist, nach dem Sintern eine geringere Porosität von 20 % bis 75 % auf und die zweite Papierbahn nach dem Sintern eine höhere Porosität von 30 % bis 90 %, so dass die zweite Papierbahn kaum als Widerstand für das Gas, sondern nur als Abstandhalter zur Bipolarplatte wirkt. Auf diese Weise kann eine optimale Gasverteilung mit optimaler Stapelfähigkeit und optimal gleichmäßiger Verteilung des mechanischen Drucks über die gesamte PEM-Membran kombiniert werden. Besonders vorteilhaft befindet sich zwischen der ersten Papierbahn und der Membran eine Micro-Porous-Layer (MPL), die eine feine Oberfläche mit geringer Rauigkeit und kleinere Poren aufweist, als die erste und zweite Papierbahn.

Gemäß einer bevorzugten Ausführungsform ist vorgesehen, dass die erste Papierbahn eine höhere Dichte aufweist, als die zweite Papierbahn. Die erste Papierbahn weist beispielsweise eine Dichte von 3 g/cm³ bis 10 g/cm³, die zweite eine Dichte von 1 g/cm³ bis 5 g/cm³ auf. Besonders bevorzugt wird hierbei die erste Papierbahn durch einen feineren Papierfaserbrei gebildet, als die zweite Papierbahn, was dementsprechend zu feineren Poren in diesem Teilbereich des Sinterpapiers führt.

Die Dicke der ersten Papierbahn beträgt bevorzugt 5 µm bis 50 µm, besonders bevorzugt 10 µm bis 20 µm und die der zweiten Papierbahn 50 µm bis 400 µm, besonders bevorzugt 80 µm bis 200 µm.

Gemäß einer weiteren bevorzugten Ausführungsform ist vorgesehen, dass das Wasserzeichen als Vertiefung in Form von mindestens einem Kanal ausgestaltet ist, wobei der Kanal zur Durchleitung von Gas dient, also dem Brennstoff oder dem Sauerstoff. Dieser Kanal ist bevorzugt mäanderförmig über die Fläche der Papierbahn ausgeführt. Alternativ sind auch mehrere Kanäle, gitterförmig oder strahlenförmig mit kreissegmentartigen Verbindungskanälen möglich.

In einer oder mehreren der Papierlagen können auch zusätzliche Kanäle für den Wassertransport nach einem der oben beschriebenen Verfahren eingebracht werden. Diese sorgen für einen ausgewogenen Wassertransport und haben den besonderen Vorteil, dass die PEM-Zelle weder überflutet wird noch austrocknet, denn beides wirkt sich nachteilig auf den Wirkungsgrad der Zelle aus. Andererseits können Wasserkanäle auch für die nachhaltige Kühlung der Zelle eingesetzt werden.

Gemäß einer weiteren bevorzugten Ausführungsform ist vorgesehen, dass in die Oberfläche des Grünpapiers oder des gesinterten Grünpapiers zusätzlich zu dem Wasserzeichen eine Strukturierung durch Lasern eingebracht ist. Dies hat den Vorteil, dass durch einen Laserstrahl beispielsweise tiefere Strukturen oder Strukturen mit steileren Flanken eingebracht werden können oder dass bereits bestehende Strukturen vertieft oder mit steileren Flanken versehen werden können. Des Weiteren kann eine Laserung auch in einer oder mehreren Formerlagen erfolgen, um Strukturierungen oder Kanäle in die Zwischenschicht zwischen Wasserzeichen und Formerlage einzubringen und so die Gasverteilung noch weiter zu verbessern.

Gemäß einer weiteren bevorzugten Ausführungsform ist vorgesehen, dass die Gase in der Mitte der Bipolarplatten (bezogen auf die Draufsicht auf die Bipolarplatten) in das GDL eingekoppelt werden und dann über verschiedene Wasserzeichenstrukturen und/oder Kanäle des GDL nach außen bzw. zum äußeren Rand des GDL hin verteilt werden. Die Wasserzeichenstrukturen und/oder Kanäle können dabei beispielsweise ausgehend von der Mitte des GDL strahlenförmig oder spiralförmig nach außen führen, die durch konzentrisch angeordnete ringförmige Wasserzeichenstrukturen und/oder Kanäle ergänzt werden können.

Das GDL hat üblicherweise eine Fläche von 300 cm² bis 350 cm² und ist je nach System und Funktion zwischen 100 µm bis 300 µm dick. Wenn die Funktion des Flow-Fields mit in das GDL integriert wird, kann die Dicke des GDL auch größer sein. Die Tiefe der Kanäle beträgt bis zu 350 µm. Da das GDL auch eine gewisse Kompressibilität aufweisen und gleichzeitig den Strom zwischen den einzelnen Zellen leiten muss, weist das GDL mit Formerlage und Rundsieblage eine Dicke von 100 µm bis 400 µm auf und ist die BPP als glattes Blech mit einer Dicke von 75 µm oder weniger auszuführen. Da die BPP üblicherweise auch eine Kühlfunktion für die Brennstoffzelle übernimmt, kann die BPP dann auch als Komposit-Sandwich ausgeführt sein, das einen porösen oder kanalartigen Durchlass für Kühlmittel aufweist. Alternativ können die Kühlkanäle auch in das GDL oder MEA integriert werden.

Gemäß einer weiteren bevorzugten Ausführungsform ist vorgesehen, dass die BPP eine vereinfachte Flow-Field-Struktur aufweist und zusätzlich ein Teil-Flow-Field in dem GDL erzeugt wird. Die Formerlage ist dabei dünn ausgeführt, um nicht zu viel Platz in Anspruch zu nehmen.

Der Zell-Pitch beträgt bevorzugt 0,8 mm bis 1 mm, da für eine 120 kW Brennstoffzelle in einer KFZ-Anwendung etwa 400 Zellen übereinander gestapelt werden. Die feine Formerlage weist bevorzugt eine Dicke zwischen 5 µm bis 50 µm auf. Die Formerlage weist bevorzugt in dem Gesamt-GDL einen Anteil von 2 % bis 40 % auf.

Gemäß einer weiteren bevorzugten Ausführungsform werden mit Hilfe von hochaufgelösten bzw. mehr- oder vielstufigen Wasserzeichen Passermarken, Positionierhilfen, Zentrierhilfen und Ansätze für Durchlässe erzeugt. Hierdurch wird vorteilhaft die weitere Verarbeitung des GDL zum Brennstoffzellen-Stack vereinfacht, da beispielsweise mit Hilfe von Durchlicht/ Auflicht Bildverarbeitungssystemen eine genaue Positionierung des GDL relativ zu den anderen Komponenten, wie BPP oder CL möglich ist.

Gemäß einer weiteren bevorzugten Ausführungsform ist vorgesehen, dass die Strukturen des GDL der Anodenseite und der Kathodenseite nicht identisch, sondern genau spiegelsymmetrisch in der Fläche und in Richtung der Materialstärke sind. Anders ausgedrückt sind die Strukturen des GDL der Anodenseite um 180° phasenverschoben zu den Strukturen des GDL der Kathodenseite. Das bedeutet, dass wenn ein Anoden-GDL mit der Flow-Field-Seite auf die Flow-Field-Seite eines Kathoden-GDL gelegt wird, die Erhebungen des einen GDL exakt mit den Vertiefungen des anderen GDL zusammenfallen. Die Kombination aus zwei 3D-spiegelsymmetrischen Anoden-/Kathoden-GDLs ergibt somit übereinandergelegt ein exakt planes Stück Grünpapier. Diese Ausführungsform hat den Vorteil, dass das Grünpapier mit beliebigem mechanischen Druck verdichtet werden kann, ohne seine Kanalstruktur zu verlieren. Denn die durch das Wasserzeichen erzeugten, Flow-Field-Kanäle bildende Erhebungen und Vertiefungen des Grünpapiers werden durch späteres Verpressen und andere mechanische Belastungen weder verletzt, zurückgedrückt oder egalisiert, so dass die Kanäle wirksam bleiben können. Diese Ausführungsform hat auch den weiteren Vorteil, dass das Anoden-GDL und das Kathoden-GDL eine unterschiedlich Porosität aufweisen können. Alternativ zur alternierenden Struktur von Anoden- und Kathoden-GDL kann auch jedes zweite Anoden-/Kathoden-Paar im Stack oder jeder zweite Stack mit 3D-Spiegesysmmetrischen GDLs ausgestattet sein.

Die Brennstoffzelle ist besonders bevorzugt eine Proton Exchange Membrane Fuel Cell (PEMFC) Brennstoffzelle. Gemäß einer bevorzugten Ausführungsform bildet die erste Papierbahn hierbei in dem aus dem Grünpapier hergestellten Gas-Diffusion-Layer eine Diffusionsschicht für eine mit katalytischem Metall, bevorzugt Platin, beschichtete Membran (CL) und die zweite Papierbahn in dem aus dem Grünpapier hergestellten Gas-Diffusion-Layer eine Verteilschicht mit Flow-Field. Das aus einem erfindungsgemäßen Grünpapier hergestellte GDL kann jedoch auch für andere Arten von Brennstoffzellen verwendet werden, die eine poröse, leitfähige Schicht zur Gasverteilung benötigen, beispielsweise eine Proton Exchange Membrane Electrolyser Cell (PEMEC), Elektrolyseur-Zellen oder einer anderen Power to X Technologie.

Die Papierbahn besteht unter anderem bevorzugt aus Papier aus Zellstofffasern oder aus Baumwollfasern, wie es beispielsweise für Banknoten verwendet wird, oder aus anderen natürlichen Fasern oder aus Synthesefasern oder einer Mischung aus natürlichen und synthetischen Fasern. Weiterhin bevorzugt besteht die Papierbahn aus einer Kombination aus mindestens zwei übereinander angeordneten und miteinander verbundenen unterschiedlichen Substraten, einem sogenannten Hybrid. Angaben zum Gewicht der verwendeten Papierbahn sind beispielsweise in der Schrift DE 102 43 653 A9 angegeben, deren Ausführungen diesbezüglich vollumfänglich in diese Anmeldung aufgenommen werden. Das metallgefüllte Grünpapier kann eine Grammatur von 100 g/m² bis 1200 g/m² aufweisen.

Als Füllstoff-Materialien für das Sinterpapier können alle Metallpulver und Metallfasern im Mikromaßstab verwendet werden, beispielsweise Titan, Kupfer, Zink oder rostfreie Edelstähle, wie sie aus DE 10 2008 042 415 B3 bekannt sind. Wichtig ist dabei, dass für die Formerlage und die Rundsieblage unterschiedliche Mischungen verwendet werden, um eine unterschiedliche Porosität der Papierlagen zu erreichen. Dabei ist die Formerlage feiner zu gestalten als die Rundsieblage. In der Formerlage können auch Nanopulver zum Einsatz kommen.

Um die Metalle bis in die kleinsten Poren vor Korrosion zu schützen und die meist gewünschten hydrophoben Eigenschaften bevorzugt auf der dem Katalysator zugewandten Seite zu erzeugen, werden gemäß einer weiteren bevorzugten Ausführungsform in einem der nachfolgenden Prozessschritte eine (thermische) ALD-Beschichtung oder andere Beschichtungsverfahren eingesetzt. Bevorzugt nach dem Entbindern und Sintern und vor dem Stanzen und Konfektionieren des GDL, sofern die Schnitte außerhalb des Korrosionsgefährdeten Bereichs liegen, oder die Schnitte in den weiteren Prozessschritten für zur fertigen Zelle extra versiegelt werden. Ansonsten besteht auch die Möglichkeit, die GDL nach dem Stanzen und Konfektionieren mit ALD, etc. zu beschichten.

Es versteht sich, dass die vorstehend genannten und die nachfolgend noch zu erläuternden Merkmale nicht nur in den angegebenen Kombinationen, sondern auch in anderen Kombinationen einsetzbar sind, ohne den Rahmen der vorliegenden Erfindung zu verlassen, soweit dies von dem Schutzumfang der Ansprüche erfasst ist.

Anhand der nachfolgenden Ausführungsbeispiele und der ergänzenden Figuren werden die Vorteile der Erfindung erläutert. Die Ausführungsbeispiele stellen bevorzugte Ausführungsformen dar, auf die jedoch die Erfindung in keinerlei Weise beschränkt sein soll. Des Weiteren sind die Darstellungen in den Figuren des besseren Verständnisses wegen stark schematisiert und spiegeln nicht die realen Gegebenheiten wider. Insbesondere entsprechen die in den Figuren gezeigten Proportionen nicht den in der Realität vorliegenden Verhältnissen und dienen ausschließlich zur Verbesserung der Anschaulichkeit. Des Weiteren sind die in den folgenden Ausführungsbeispielen beschriebenen Ausführungsformen der besseren Verständlichkeit wegen auf die wesentlichen Kerninformationen reduziert. Bei der praktischen Umsetzung können wesentlich komplexere Muster oder Bilder zur Anwendung kommen.

Im Einzelnen zeigen schematisch:
- Fig. 1: eine Doppelrundsieb-Papiermaschine zur Herstellung eines erfindungsgemäßen Grünpapiers,
- Fig. 2: eine Rundsieb-Papiermaschine und einem Kurzformer in schematischer Darstellung,
- Fig. 3: ein zweilagiges GDL mit einem durch ein Wasserzeichen geformten mäanderförmigen Kanal und hierbei links in Draufsicht und rechts in Schnittdarstellung entlang des Schnitts A-B,
- Fig. 4: das zweilagige GDL aus Fig. 3 ergänzt um Passmarken, Positionierhilfen und Zentrierhilfen,
- Fig. 5: eine Kombination aus zwei 3D-spiegelsymmetrischen Anodenund Kathoden-GDLs und hierbei links jeweils in Draufsicht und rechts in Schnittdarstellung entlang des Schnitts A-B,
- Fig. 6: ein GDL mit durch ein Wasserzeichen geformten Kanälen, die von der Mitte des GDL nach außen führen und hierbei in Fig. 6a mit strahlenförmigen Kanälen, in Fig. 6b mit strahlenförmigen und konzentrischen Kanälen und in Fig. 6c mit spiralförmigen Kanälen.

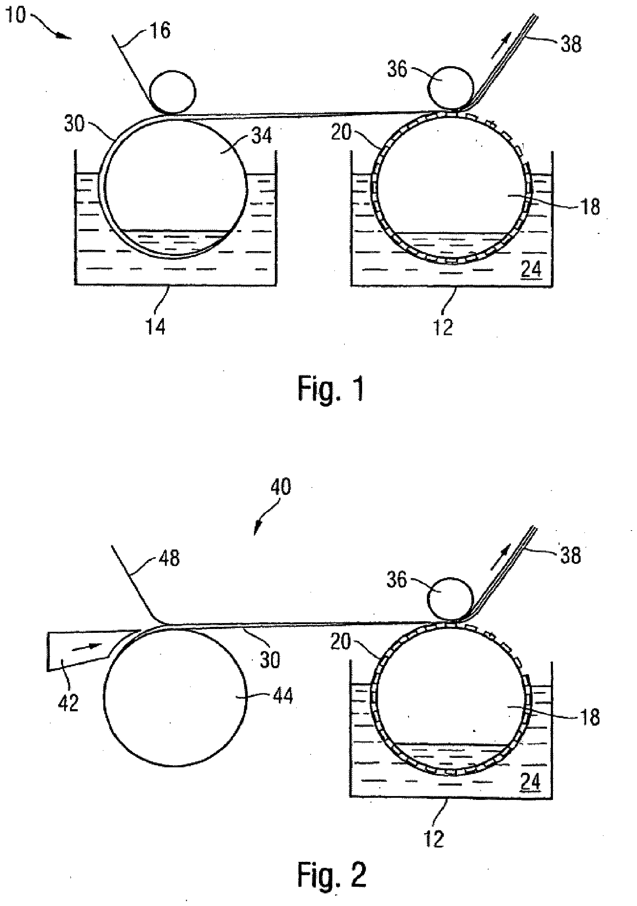

Fig.1 zeigt in schematischer Darstellung eine Doppelrundsieb-Papiermaschine 10, wie sie beispielsweise aus WO 2006/099971 A2 für die Herstellung von Sicherheitspapier bekannt ist. Die Papiermaschine 10 enthält zwei Rundsieb-Papiermaschinen 12 und 14, die über einen Abnahmefilz 16 miteinander in Verbindung stehen.

In der ersten Papiermaschine 12 wird auf einem Rundsieb 18 eine Papierbahn 20 gebildet. In der zweiten Papiermaschine 14 wird parallel dazu eine zweite, homogene Papierbahn 30 hergestellt, mittels des Abnahmefilzes 16 vom Rundsieb 34 abgenommen und zur ersten Papiermaschine 12 geführt, wo sie im Bereich der Andruckrolle 36 mit der ersten Papierbahn 20 verbunden wird. Die miteinander verbundenen Papierbahnen 38 bilden zusammen die GDL und werden weiteren Bearbeitungsstationen zugeführt.

Die zweite Papierbahn 30 kann, wie in Fig. 2 dargestellt, auch mit einem Kurzformer 40 erzeugt werden, bei dem die Papiermasse mit einer Stoffauflaufdüse 42 auf die Oberfläche eines Rundsiebs 44 aufgedüst wird. Mit einem solchen Kurzformer lassen sich besonders dünne Papierlagen, beispielsweise mit einer Grammatur von 15 bis 25 g/m2, erzeugen.

Es versteht sich, dass mit den gezeigten Papiermaschinen 12, 14, 40 in analoger Weise auch drei oder mehr Papierbahnen erzeugt und zusammengeführt werden können.

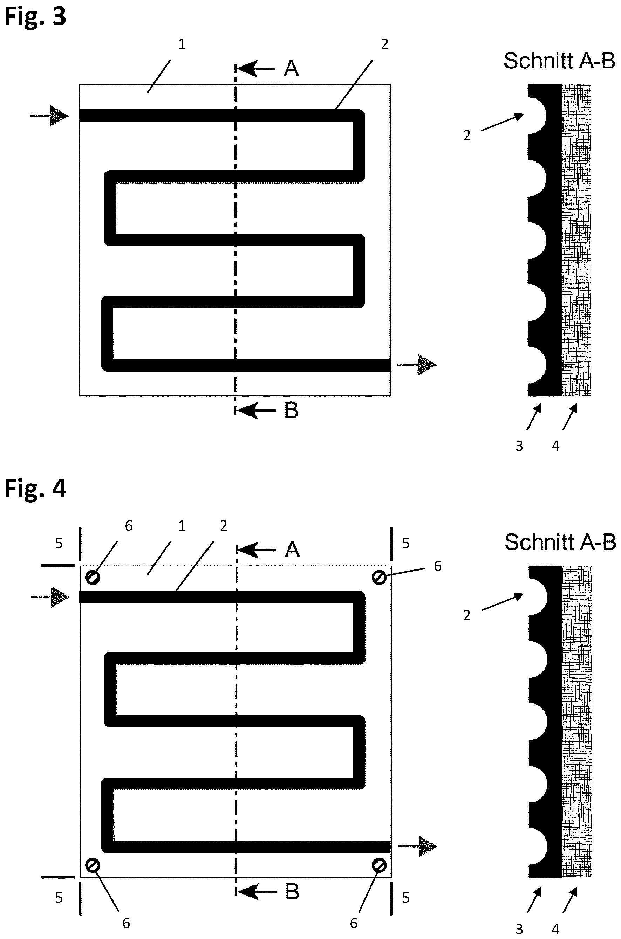

Fig. 3 zeigt schematisch ein zweilagiges GDL 1 mit einem durch ein Wasserzeichen geformten mäanderförmigen Kanal 2 und hierbei links in Draufsicht und rechts in Schnittdarstellung entlang des Schnitts A-B.

Im Schnitt A-B zeigt der schwarze Bereich 3 die Rundsieblage mit strukturiertem Wasserzeichen als Kanal 2 und der gemusterte Bereich 4 die Formerlage mit feiner Porenstruktur. Die einzelnen Lagen 3 und 4 können je nach Auslegung eine unterschiedliche Grund-Dicke aufweisen. Entlang der Mäanderstruktur des Kanals 2 zieht sich im obigen Beispiel ein durch das Wasserzeihen geformtes Schnittprofil als Dickenmodulation durch die Rundsieblage, die in der Zeichnung eine Halbkreisform hat. Prinzipiell ist dabei jede denkbare Profilform möglich, die keine Hinterschneidungen besitzt und einen Wandwinkel <80° formt. Die großen Pfeile zeigen den Gas Ein-/Auslass. Das Gasket um das GDL herum muss entsprechend gestaltet werden.

Fig. 4 zeigt schematisch das zweilagige GDL aus Fig. 3 ergänzt um Passmarken Positionierhilfen und Zentrierhilfen.

Mit Hilfe von Highlight-Wasserzeichen können, zur Vereinfachung der weiteren Verarbeitung des GDL zum Brennstoffzellen-Stack, Passmarken, Positionierhilfen, Zentrierhilfen und Ansätze für Durchlässe eingebaut werden. Dies sorgt dafür, dass z.B. mit Hilfe von Durchlicht/Auflicht Bildverarbeitungssystemen eine genaue Positionierung des GDL relativ zu den anderen Komponenten, wie BPP oder CL möglich ist.

Die Striche 5 sollen beispielsweise als Highlight-Wasserzeichen realisierte Schnittmarken für das GDL und die Kreise 6 sollen Zentrier-/Positionierhilfen darstellen. Diese können natürlich in jeder beliebigen Form eingebracht werden. Es könnten auch HD-Wasserzeichen Lasersiebe zum Einsatz kommen.

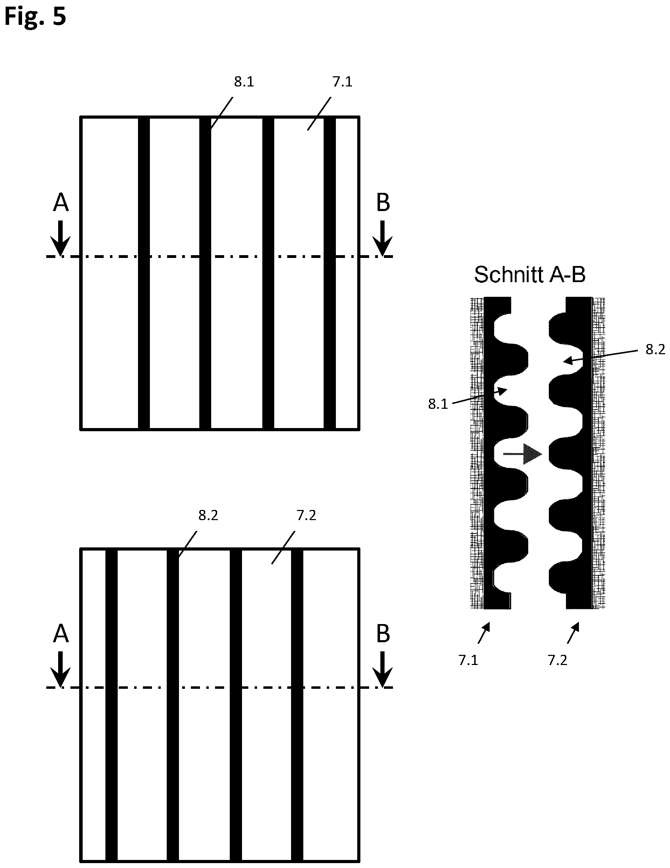

Fig. 5 zeigt schematisch eine Kombination aus einem Anoden-GDL 7.1 und einem 3D-spiegelsymmetrischen dazu ausgeformten Kathoden-GDL 7.2 und hierbei links oben in Draufsicht auf die Oberfläche des Anoden-GDL 7.1, links unten in Draufsicht auf die Oberfläche des Kathoden-GDL 7.2 und rechts jeweils in Schnittdarstellung entlang des Schnitts A-B.

Die durch das Wasserzeichen erzeugten, Flow-Field-Kanäle 8.1 und 8.2 bildende Erhebungen und Vertiefungen des Grünpapiers bzw. des fertigen GDL können durch Verpressen und andere mechanische Belastungen wieder verletzt, zurückgedrückt oder sogar egalisiert werden, so dass die Kanäle 8.1 und 8.2 nicht mehr voll wirksam sein können.

Dieses Problem kann beseitigt werden, dass die durch Wasserzeichen erzeugten Strukturen der GDLs der Anodenseite und der Kathodenseite nicht identisch, sondern genau spiegelsymmetrisch in der Fläche, aber auch in Richtung der Materialstärke sind. Das bedeutet, wenn das Anoden-GDL 7.1 mit der Flow-Field-Seite auf das Flow-Field-Seite des Kathoden-GDL 7.2 gelegt wird, heben sich die Erhebungen und Vertiefungen der parallel angeordneten Kanäle 8.1 und 8.2 exakt auf. Die Kombination aus zwei 3D-spiegelsymmetrischen Anoden-/Kathoden-GDLs ergibt somit ein planes Stück Sinterpapier, das mit beliebigem Druck verdichtet werden kann, ohne seine Kanalstruktur zu verlieren.

Des Weiteren können Anoden-GDL 7.1 und das Kathoden-GDL 7.2 eine unterschiedlich Porosität aufweisen. Beispielsweise kann das Anoden-GDL 7.1 eine Porosität von 20 % bis 75 % aufweisen und das Kathoden-GDL 7.2 eine Porosität von 30 % bis 90 %, so dass das Kathoden-GDL 7.2 kaum als Widerstand für das Gas, sondern nur als Abstandhalter zur Bipolarplatte wirkt.

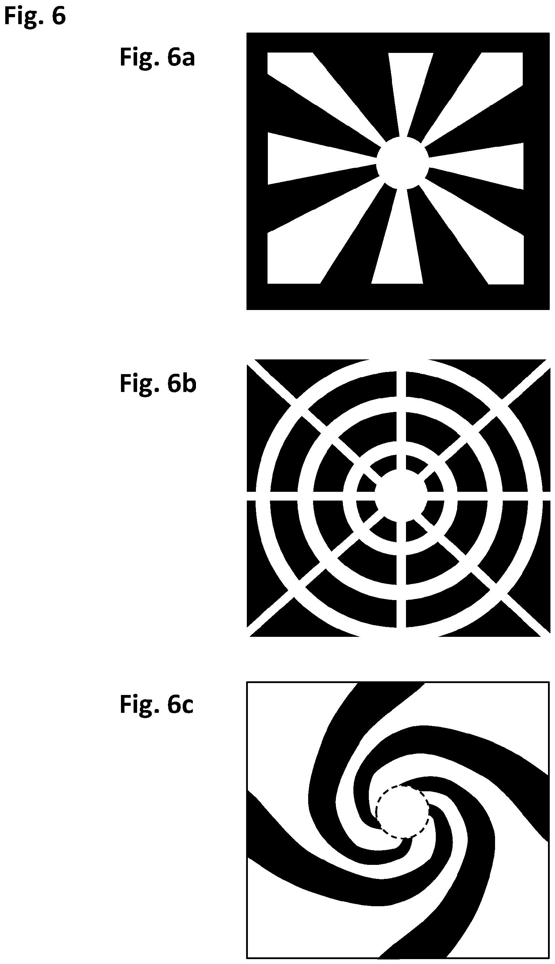

Fig. 6 zeigt in Fig. 6a, 6b und 6c in Draufsicht drei Ausführungsformen, bei denen die Gase in der Mitte der (nicht dargestellten) Bipolarplatten in das GDL eingekoppelt werden und dann über verschiedene Wasserzeichenstrukturen und/ oder Kanäle des GDL nach außen bzw. zum äußeren Rand des GDL hin verteilt werden.

Die Kanäle der Wasserzeichenstrukturen sind gemäß Fig. 6a ausgehend von der Mitte des GDL strahlenförmig ausgebildet. Die Zuführung der Gase erfolgt über die kreisförmig dargestellte Öffnung in der Mitte des GDL, die schwarz dargestellten Bereiche stellen die Bereiche des Wasserzeichens dar, die eine höhere Dicke des GDL aufweisen, als die weiß dargestellten Bereiche mit verringerter Dicke des GDL, die die Kanäle bilden.

Fig. 6b zeigt ein Ausführungsbeispiel, bei dem radiale Kanäle der Wasserzeichenstrukturen durch konzentrisch angeordnete ringförmige Kanäle ergänzt werden, so dass sich eine spinnennetzartige Struktur ergibt. Die Zuführung der Gase erfolgt über die kreisförmig dargestellte Öffnung in der Mitte des GDL, die schwarz dargestellten Bereiche stellen die Bereiche des Wasserzeichens dar, die eine höhere Dicke des GDL aufweisen, als die weiß dargestellten Bereiche mit verringerter Dicke des GDL, die die Kanäle bilden.

Fig. 6c zeigt ein Ausführungsbeispiel, bei dem die Kanäle der Wasserzeichenstrukturen ausgehend von der Mitte des GDL spiralförmig ausgebildet sind. Die Zuführung der Gase erfolgt über die kreisförmig dargestellte Öffnung in der Mitte des GDL, die schwarz dargestellten Bereiche stellen die Bereiche des Wasserzeichens dar, die eine höhere Dicke des GDL aufweisen, als die weiß dargestellten Bereiche mit verringerter Dicke des GDL, die die Kanäle bilden.

## Patentansprüche

1. Grünpapier zur Herstellung eines Gas-Diffusion-Layers (GDL) für eine Brennstoffzelle, wobei das Grünpapier mindestens eine erste Papierbahn aufweist, in die mindestens ein Wasserzeichen eingebracht ist, wobei das Wasserzeichen eine Strukturierung für das Flow-Field des aus dem Grünpapier hergestellten Gas-Diffusion-Layers (GDL) bildet.

2. Grünpapier nach Anspruch 1, wobei das Wasserzeichen ein echtes Wasserzeichen ist, bei dem die Dicke des Papiers variiert, die Dichte des Papiers jedoch nicht variiert, und/ oder das Wasserzeichen ein unechtes Wasserzeichen ist, bei dem die Dicke des Papiers reduziert ist, wobei jedoch gleichzeitig die Dichte des Papiers erhöht ist.

3. Grünpapier nach Anspruch 1 oder 2, wobei das Grünpapier eine erste Papierbahn und mindestens eine zweite Papierbahn aufweist.

4. Grünpapier nach einem der vorigen Ansprüche, wobei das Wasserzeichen als Vertiefung in Form von mindestens einem Kanal ausgestaltet ist.

5. Grünpapier nach einem der vorigen Ansprüche, wobei das Wasserzeichen wenig oder kaum strukturiert ist, um in dem GDL Passermarken, Positionierhilfen, Zentrierhilfen oder Ansätze für Durchlässe zu erzeugen.

6. Grünpapier nach einem der vorigen Ansprüche, wobei die Strukturen des Wasserzeichens der Anodenseite und der Kathodenseite der Brennstoffzelle nicht identisch, sondern genau spiegelsymmetrisch in der Fläche und in Richtung der Materialstärke sind.

7. Verfahren zur Herstellung eines Grünpapiers zur Herstellung eines Gas-Diffusion-Layers (GDL) für eine Brennstoffzelle, wobei mindestens eine erste bevorzugt mit Metall-Pulver und/oder Metall-Fasern versetzte Papierbahn erzeugt wird, wobei in die Papierbahn mindestens ein Wasserzeichen eingebracht wird, um eine Strukturierung für das Flow-Field des aus dem Grünpapier hergestellten Gas-Diffusion-Layers (GDL) zu bilden.

8. Verfahren nach Anspruch 7, wobei das Wasserzeichen durch ein echtes Wasserzeichen gebildet wird, bei dem die Dicke des Papiers variiert, die Dichte des Papiers jedoch nicht variiert, und/oder das Wasserzeichen durch ein unechtes Wasserzeichen gebildet wird, bei dem die Dicke des Papiers reduziert ist, wobei jedoch gleichzeitig die Dichte des Papiers erhöht ist.

9. Verfahren nach Anspruch 7 oder 8, wobei eine erste Papierbahn (20) gebildet wird und eine zweite Papierbahn (30) gebildet wird, die im noch feuchten Zustand mit der ersten Papierbahn (20) zusammengeführt und fest verbunden wird, wobei die erste Papierbahn (20) und die zweite Papierbahn (30) zusammen ein Grünpapier für das GDL bilden.

10. Verfahren nach Anspruch 9, wobei die erste (20) und/oder zweite Papierbahn (30) in einer Rundsieb-Papiermaschine (12, 14) erzeugt wird.

11. Verfahren nach Anspruch 9 oder 10, wobei die erste (20) und/oder zweite Papierbahn (30) in einem Kurzformer (40) erzeugt wird, bei dem die Papiermasse auf ein Rundsieb (44) aufgedüst wird.

12. Verfahren nach einem der Ansprüche 9 bis 11, wobei die erste Papierbahn (20) eine höhere Dichte aufweist, als die zweite Papierbahn (30), wobei die erste Papierbahn beispielsweise eine Dichte von 3 g/cm³ bis 10 g/cm³ und die zweite Papierbahn eine Dichte von 1 g/cm³ bis 5 g/cm³ aufweist.

13. Verfahren nach Anspruch 12, wobei die erste Papierbahn (20) durch einen feineren Papierfaserbrei gebildet wird, als die zweite Papierbahn (30).

14. Verfahren nach Anspruch 9 bis 13, wobei die erste Papierbahn (20) in dem aus dem Grünpapier hergestellten Gas-Diffusion-Layer (GDL) eine Diffusionsschicht für eine mit katalytischem Metall, bevorzugt Platin, beschichtete Membran (CL) bildet und die zweite Papierbahn (30) in dem aus dem Grünpapier hergestellten Gas-Diffusion-Layer (GDL) eine Verteilschicht mit Flow-Field bildet.

15. Verwendung eines Gas-Diffusion-Layers (GDL), das aus einem Grünpapier nach einem der Ansprüche 1 bis 6 bzw. aus einem nach einem Verfahren nach einem der Ansprüche 7 bis 14 hergestellten Grünpapier hergestellt worden ist, in einer Proton Exchange Membrane Fuel Cell (PEMFC) Brennstoffzelle, in einer Proton Exchange Membrane Electrolyser Cell (PEMEC), in Elektrolyseur-Zellen oder einer anderen Power to X Technologie, die entsprechend poröses, leitfähiges Material zu Gas-/Strom-/Reaktionstroff-Verteilung benötigt.

## Claims

1. Green paper for producing a gas diffusion layer (GDL) for a fuel cell, wherein the green paper has at least one first paper web, in which at least one watermark is made, where the watermark forms a patterning for the flow field of the gas diffusion layer (GDL) produced from the green paper.

2. Green paper according to Claim 1, wherein the watermark is a true watermark, in which the thickness of the paper varies but the density of the paper does not vary, and/or in that the watermark is a false watermark, in which the thickness of the paper is reduced but at the same time the density of the paper is increased.

3. Green paper according to Claim 1 or 2, wherein the green paper has a first paper web and at least one second paper web.

4. Green paper according to any of the preceding claims, wherein the watermark is configured as a recess in the form of at least one channel.

5. Green paper according to any of the preceding claims, wherein the watermark has little or virtually no patterning so as in the GDL to generate registration marks, positioning aids, centering aids or starting points for passages.

6. Green paper according to any of the preceding claims, wherein the patterns of the watermark of the anode side and of the cathode side of the fuel cell are not identical, but are instead exactly mirror-symmetrical in the area and in the material-thickness direction.

7. Process for producing a green paper for producing a gas diffusion layer (GDL) for a fuel cell, wherein at least one first paper web, preferably admixed with metal powder and/or metal fibers, is generated, with at least one watermark being made in the paper web, in order to form a patterning for the flow field of the gas diffusion layer (GDL) produced from the green paper.

8. Process according to Claim 7, wherein the watermark is formed by a true watermark, in which the thickness of the paper varies but the density of the paper does not vary, and/or in that the watermark is formed by a false watermark, in which the thickness of the paper is reduced but at the same time the density of the paper is increased.

9. Process according to Claim 7 or 8, wherein a first paper web (20) is formed and a second paper web (30) is formed, the web (30) in the still-wet state being brought together with and firmly joined to the first paper web (20), where the first paper web (20) and the second paper web (30) together form a green paper for the GDL.

10. Process according to Claim 9, wherein the first (20) and/or second paper web (30) is generated in a cylindrical paper machine (12, 14).

11. Process according to Claim 9 or 10, wherein the first (20) and/or second paper web (30) is generated in a short former (40) wherein the paper stock is applied via nozzle to a cylindrical wire (44).

12. Process according to any of Claims 9 to 11, wherein the first paper web (20) has a higher density than the second paper web (30), where the first paper web for example has a density of 3 g/cm³ to 10 g/cm³ and the second paper web has a density of 1 g/cm³ to 5 g/cm³.

13. Process according to Claim 12, wherein the first paper web (20) is formed by a finer paper fiber slurry than the second paper web (30).

14. Process according to Claim 9 to 13, wherein the first paper web (20) forms a diffusion layer for a membrane (CL) coated with catalytic metal, preferably platinum, in the gas diffusion layer (GDL) produced from the green paper, and the second paper web (30) forms a distribution layer with flow field in the gas diffusion layer (GDL) produced from the green paper.

15. Use of a gas diffusion layer (GDL) produced from a green paper according to any of Claims 1 to 6 or from a green paper produced by a process according to any of Claims 7 to 14 in a proton exchange membrane fuel cell (PEMFC), in a proton exchange membrane electrolyzer cell (PEMEC), in eletrolyzer cells or in another power-to-X technology which requires correspondingly porous, conductive material for gas/power/reactant distribution.

## Revendications

1. Papier vert pour la fabrication d'une couche de diffusion gazeuse (GDL) pour une pile à combustible, le papier vert comprenant au moins une première feuille continue, dans laquelle est introduit au moins un filigrane, le filigrane formant une structuration pour le champ d'écoulement de la couche de diffusion gazeuse (GDL) fabriquée à partir du papier vert.

2. Papier vert selon la revendication 1, dans lequel le filigrane est un filigrane vrai, dans lequel l'épaisseur du papier varie, mais la masse volumique du papier ne varie pas, et/ou le filigrane est un faux filigrane, dans lequel l'épaisseur du papier est réduite, mais cependant la masse volumique du papier étant simultanément augmentée.

3. Papier vert selon la revendication 1 ou 2, dans lequel le papier vert comprend une première feuille continue et au moins une deuxième feuille continue.

4. Papier vert selon l'une des revendications précédentes, dans lequel le filigrane a la constitution d'un renfoncement sous forme d'au moins un canal.

5. Papier vert selon l'une des revendications précédentes, dans lequel le filigrane est peu ou à peine structuré, pour produire dans la GDL des marques de repérage, des aides au positionnement, des aides au centrage ou des ergots pour passages.

6. Papier vert selon l'une des revendications précédentes, dans lequel les structures du filigrane du côté anode et du côté cathode de la pile à combustible ne sont pas identiques, mais présentent une symétrie rigoureusement spéculaire en aire et orientation de l'épaisseur du matériau.

7. Procédé de fabrication d'un papier vert pour la fabrication d'une couche de diffusion gazeuse (GDL) pour une pile à combustible, dans lequel est produite au moins une première feuille continue, de préférence additionnée d'une poudre métallique et/ou de fibres métalliques, au moins un filigrane étant introduit dans la feuille continue pour former le champ d'écoulement de la couche de diffusion gazeuse (GDL) fabriquée à partir du papier vert.

8. Procédé selon la revendication 7, dans lequel le filigrane est formé d'un filigrane vrai, dans lequel l'épaisseur du papier varie, mais la masse volumique du papier ne varie pas, et/ou le filigrane est formé d'un faux filigrane, dans lequel l'épaisseur du papier est réduite, mais simultanément la masse volumique du papier est augmentée.

9. Procédé selon la revendication 7 ou 8, dans lequel il y a formation d'une première feuille continue (20) et formation d'une deuxième feuille continue (30), qui encore à l'état humide est réunie et fermement assemblée à la première feuille continue (20), la première feuille continue (20) et la deuxième feuille continue (30) formant ensemble un papier vert pour la GDL.

10. Procédé selon la revendication 9, dans lequel la première (20) et/ou la deuxième (30) feuilles continues sont produites dans une machine à papier à forme ronde (12, 14).

11. Procédé selon la revendication 9 ou 10, dans lequel la première (20) et/ou la deuxième (30) feuilles continues sont formées dans un formeur court (40), dans lequel la pâte de papier est jetée sur une forme ronde (44) .

12. Procédé selon l'une des revendications 9 à 11, dans lequel la première feuille continue (20) présente une masse volumique plus élevée que celle de la deuxième feuille continue (30), la première feuille continue présentant par exemple une masse volumique de 3 g/cm³ à 10 g/cm³ et la deuxième feuille continue présentant une masse volumique de 1 g/cm³ à 5 g/cm³.

13. Procédé selon la revendication 12, dans lequel la première feuille continue (20) est formée d'une pâte de fibres de papier plus fine que celle de la deuxième feuille continue (30).

14. Procédé selon les revendications 9 à 13, dans lequel la première feuille continue (20) forme dans la couche de diffusion gazeuse (GDL) fabriquée à partir du papier vert une couche de diffusion pour une membrane (CL) revêtue d'un métal catalytique, de préférence le platine, et la deuxième feuille continue (30) forme dans la couche de diffusion gazeuse (GDL) fabriquée à partir du papier vert une couche de répartition avec champ d'écoulement.

15. Utilisation d'une couche de diffusion gazeuse (GDL) qui a été fabriquée à partir d'un papier vert selon l'une des revendications 1 à 6 ou à partir d'un papier vert fabriqué par un procédé selon l'une des revendications 7 à 14, dans une pile à combustible Proton Exchange Membrane Fuel Cell (PEMFC), dans une Proton Exchange Membrane Electrolyser Cell (PEMEC), dans des piles d'électrolyseur ou dans une autre technologie Power to X qui a besoin d'un matériau conducteur ayant une porosité appropriée pour la répartition gaz/courant/réactif.
